# DEMANDE DE BREVET EUROPEEN

(11) **EP 2 096 342 A1**
(43) Date de publication de la demande: **02.09.2009**
(21) Numéro de dépôt: 09356012.6
(22) Date de dépôt: 18.02.2009
(51) Int. Cl.: F16K 23/00, A47J 43/07

(54) **Robinet pour distribuer les aliments contenus dans un récipient et appareil électroménager de préparation culinaire muni d'un tel robinet**

(30) Priorité: 27.02.2008 FR 0801057
(71) Demandeur: Seb SA, 69130 Ecully (FR)
(72) Inventeur: Sauniere, Damien, 53300 Ambrieres les Vallees (FR); Martin, Philippe, 53240 Andouille (FR); Pommerel, Vincent, 61000 Alencon (FR)
(74) Mandataire: Kiehl, Hubert

(57) **Abrégé**

Robinet (4) destiné à distribuer les aliments contenus dans un récipient (2) d'appareil électroménager de préparation culinaire, ledit robinet (4) comportant un corps (40) comprenant un orifice d'entrée (42A), un orifice de sortie (43A) et des moyens de fermeture (45) du robinet à ouverture commandée disposés entre l'orifice d'entrée (42A) et l'orifice de sortie (43A), **caractérisé en ce que** ledit orifice de sortie (43A) comporte un embout (5) flexible amovible comprenant une ouverture (50) de forme oblongue comportant au moins deux parois (51, 52) s'étendant au travers de l'orifice de sortie (43A) pour diviser ce dernier en plusieurs ouvertures (50A) de section de passage réduite et en ce que, lesdites parois (51, 52) comportent une extrémité supérieure (51 A, 52A) s'étendant à l'intérieur dudit corps (40), lesdites extrémités supérieures (51A, 52A) des parois étant disposées à des hauteurs différentes selon l'axe de l'orifice de sortie (43A).

## Description

La présente invention se rapporte au domaine technique général des robinets pour récipient d'appareil électroménager de préparation culinaire et se rapporte plus particulièrement à un robinet comportant des moyens de fermeture à ouverture commandée.

Il est connu, de la demande de brevet FR 07 54145, déposée par la demanderesse, un appareil de préparation culinaire comportant un récipient muni d'un robinet pour distribuer les aliments comprenant un orifice d'entrée, un orifice de sortie et un clapet à ouverture commandée disposé entre l'orifice d'entrée et l'orifice de sortie. Un tel appareil à robinet présente l'avantage d'une grande ergonomie d'utilisation.

Cependant, un tel robinet comporte une portion de conduit en aval de la soupape susceptible de contenir du liquide qui, après fermeture du robinet, continu de s'écouler au goutte à goutte par l'orifice de sortie. Cet écoulement au goutte-à-goutte après fermeture du robinet est mal perçu par l'utilisateur qui peut penser que l'étanchéité du robinet est défectueuse.

Il est connu du document JP 61283316 de remédier au problème d'écoulement de gouttes d'eau après la fermeture d'un robinet domestique en disposant une grille stop goutte au niveau de l'orifice de sortie, cette grille possédant des parois venant diviser l'orifice de sortie en plusieurs ouvertures de section de passage réduite de sorte que la tension de surface de l'eau sur les parois de la grille empêche l'écoulement des gouttes par l'orifice de sortie lorsque le robinet est fermé.

Cependant, un tel robinet domestique, qui est prévu pour déverser de l'eau, présente l'inconvénient de ne pas être adapté pour déverser des jus réalisés à partir d'aliments fibreux, comme par exemple de l'ananas, les fibres présentes dans le jus ayant tendance à venir boucher le robinet en se mettant en travers de la grille stop goutte.

Aussi, un but de la présente invention est de proposer un robinet destiné à être monté sur un récipient d'appareil électroménager de préparation culinaire qui remédie à ces inconvénients.

A cet effet, l'invention se rapporte à un robinet destiné à distribuer les aliments contenus dans un récipient d'appareil électroménager de préparation culinaire, ledit robinet comportant un corps comprenant un orifice d'entrée, un orifice de sortie et des moyens de fermeture du robinet à ouverture commandée disposés entre l'orifice d'entrée et l'orifice de sortie, caractérisé en ce que l'orifice de sortie comporte des moyens stop goutte comprenant au moins deux parois divisant l'orifice de sortie en plusieurs ouvertures de section de passage réduite, les parois comportant une extrémité supérieure s'étendant à l'intérieur du corps, et en ce que les extrémités supérieures des parois sont disposées à des hauteurs différentes selon l'axe de l'orifice de sortie.

Par hauteur selon l'axe de l'orifice de sortie, on entend la position de l'extrémité supérieure de la paroi en projection sur l'axe de l'orifice de sortie. Une telle caractéristique permet d'obtenir un décalage des extrémités supérieures des parois selon le flux d'écoulement du liquide à la sortie du robinet de sorte que l'extrémité supérieure de l'une des parois se trouve en amont de l'extrémité supérieure de l'autre paroi. De cette manière, les éventuelles fibres entraînées par le liquide au travers du robinet parviendront sur l'extrémité supérieure de l'une des parois avant de venir au contact de la seconde, évitant ainsi que les fibres se placent perpendiculairement au flux découlement.

Selon une autre caractéristique de l'invention, les extrémités supérieures des parois sont décalées axialement de sorte que la droite passant par ces extrémités supérieures forme un angle de moins de 80° par rapport à l'axe de l'orifice de sortie du robinet.

Selon une autre caractéristique de l'invention, les parois s'étendent vers l'intérieur du robinet sur des hauteurs axiales différentes.

Selon une autre caractéristique de l'invention, les parois sont portées par un embout amovible du corps du robinet.

L'invention concerne également un embout destiné à être monté sur un robinet pour distribuer les aliments contenus dans un récipient, l'embout comportant un corps adapté pour être fixé au niveau d'un orifice de sortie du robinet, caractérisé en ce que l'embout comporte au moins deux parois divisant l'orifice de sortie en plusieurs ouvertures de section de passage réduite, les parois s'étendant vers l'intérieur du robinet sur des hauteurs différentes.

Selon encore une autre caractéristique de l'invention, l'embout est réalisé dans un matériau flexible, tel un matériau élastomère.

L'invention concerne également un appareil électroménager de préparation culinaire comportant un récipient de travail renfermant un outil rotatif pour le mixage des aliments, caractérisé en ce que le récipient comporte un robinet tel que précédemment décrit.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une élévation partiellement arrachée d'un appareil de préparation culinaire comportant un récipient muni d'un robinet selon un mode particulier de réalisation de l'invention,
- la figure 2 est une vue en perspective du robinet de la figure 1 désaccouplé du récipient,
- la figure 3 est une vue de dessous de l'embout stop goutte du robinet de la figure 2,
- la figure 4 est une vue en perspective du dessus de l'embout stop goutte,
- la figure 5 est une vue en coupe selon la ligne V-V de la figure 1.

Seuls les éléments nécessaires à la compréhension de l'invention ont été représentés. Pour faciliter la lecture des dessins les mêmes éléments portent les mêmes références d'une figure à l'autre.

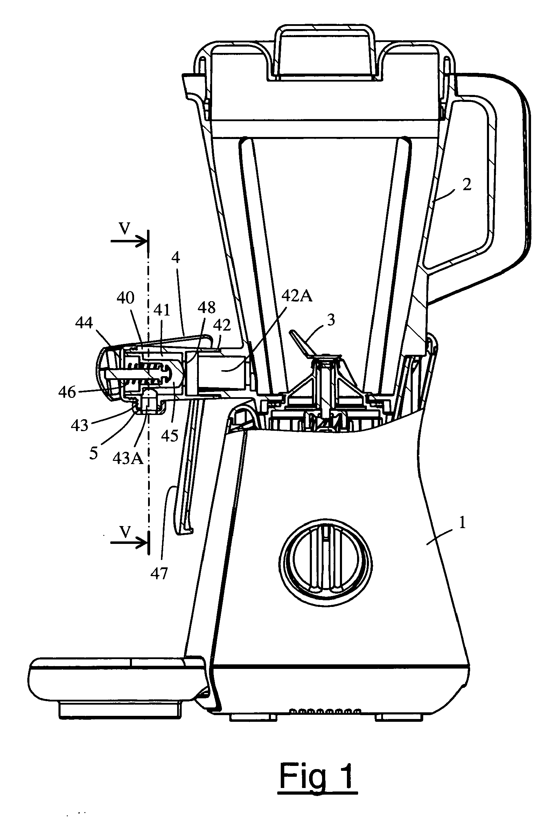

La figure 1 illustre un appareil de préparation culinaire de type blender comportant un boîtier 1 sur lequel est disposé un récipient 2 amovible. Le boîtier 1 renferme, de manière connue en soi, un moteur électrique permettant l'entraînement d'un outil de mixage 3 disposé dans le fond du récipient 2.

Le récipient 2 comporte un robinet 4 de distribution comportant un corps creux 40 délimitant un canal 41 de distribution muni d'un orifice d'entrée 42A au niveau d'une extrémité de raccordement 42 avec le récipient 2. Le corps creux 40 comprend, à distance de son extrémité de raccordement 42, une bouche de distribution 43 de forme oblongue raccordée au canal 41 et disposée latéralement à ce dernier, la bouche de distribution 43 comprenant un orifice de sortie 43A orientée vers le bas.

Afin de faciliter le nettoyage du robinet 4, et en particulier du canal 41 de distribution, le corps creux 40 comporte à l'opposé de l'extrémité de raccordement, une tête amovible 44 fixée par des filets à la partie principale du corps 40. Le robinet 4 comprend en outre des moyens de fermeture du canal 41 interposée entre l'extrémité de raccordement et la bouche de distribution 43. Les moyens de fermeture sont asservis en fermeture par un ressort 46 et commandés en ouverture par un levier 47. Les moyens de fermeture comprennent avantageusement un clapet 45 repoussé contre un siège 48 aménagé dans le canal de distribution 41 sensiblement à mi-distance entre l'orifice d'entrée 42A et la bouche de distribution 43. Le siège 48 est ici défini par un épaulement annulaire solidaire des parois du canal 41 et le clapet 45 est préférentiellement réalisé en matière plastique ou en élastomère.

Cet appareil est semblable à celui décrit dans la demande de brevet FR 07 54145 déposée par la demanderesse.

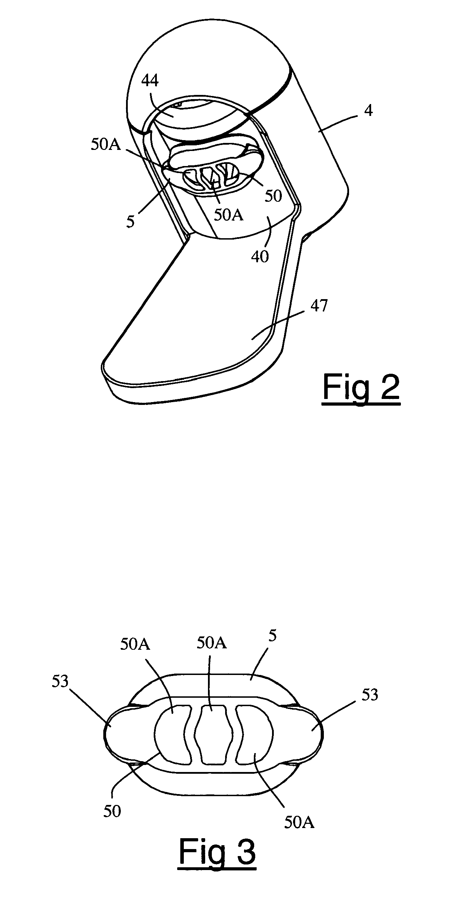

Plus particulièrement selon l'invention, et conformément à la figure 2, la bouche de distribution 43 du robinet reçoit un embout stop goutte 5 amovible destiné à éviter que le liquide présent dans le canal de distribution 41, en aval du clapet 45, ne continue de s'écouler au goutte-à-goutte par l'orifice de sortie 43A après fermeture du robinet 4.

Conformément à la figure 3, l'embout 5 stop goutte comporte un corps de forme oblongue adapté pour s'engager élastiquement autour de la bouche de distribution 43 du robinet et rester fixé à ce dernier. Afin de faciliter l'extraction de l'embout 5 pour son nettoyage, ce dernier comporte des oreilles 53 de préhension s'étendant latéralement au corps.

L'embout 5 comporte une ouverture 50 de forme oblongue présentant sensiblement la forme de l'orifice de sortie 43A de la bouche de distribution et comprenant deux parois 51,52 s'étendant au travers de l'orifice de sortie 43A pour diviser ce dernier en trois ouvertures 50A de section de passage réduite. De manière avantageuse l'embout 5 est réalisé en matériau flexible, tel un matériau plastique ou un matériau élastomère.

A titre d'exemple, l'ouverture 50 de l'embout de forme oblongue présente une longueur de l'ordre de 16 mm et une largeur de l'ordre de 8 mm, les parois 51,52 permettant d'obtenir des ouvertures 50A présentant une largeur inférieure à 5 mm. De manière préférentielle, les parois 51,52 présentent une forme légèrement arquée vers l'extérieur de sorte que les trois ouvertures 50A présentent des largeurs sensiblement équivalentes longitudinalement à l'embout 5 et sensiblement constantes transversalement à l'embout 5.

Une telle limitation des dimensions des ouvertures 50A permet d'avoir des parois en vis-à-vis distantes de moins de 5 mm, ce qui permet de réduire suffisamment le volume des gouttes traversant l'embout de distribution 43 pour que la tension de surface soit suffisante pour empêcher la chute des gouttes de liquide lorsque le robinet 4 est fermé.

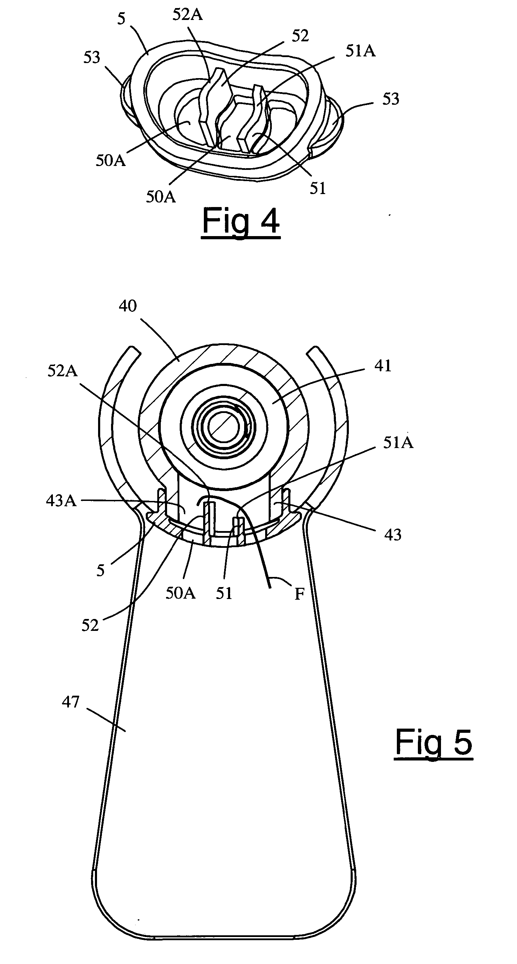

Conformément aux figures 4 et 5, les parois 51,52 traversant l'orifice de sortie 43A s'étendent vers l'intérieur de la bouche de distribution 43, les parois 51,52 présentant une extrémité supérieure 51 A, 52A qui fait saillie vers l'intérieur du corps 40 du robinet. Les parois 51,52 s'étendent sur des hauteurs différentes de sorte que les extrémités supérieures 51 A, 52A respectives des deux parois se trouvent décalées l'une par rapport à l'autre en projection axiale sur l'axe de l'orifice de sortie 43A.

Une telle caractéristique permet d'orienter les éventuelles fibres présentes dans le jus dans le sens du flux de liquide à la sortie de la bouche de distribution 43 et donc de favoriser leur évacuation au travers des ouvertures 50A. On évite ainsi une accumulation des fibres F sur le sommet des parois et on réduit fortement le risque d'avoir la bouche de distribution obstruée par les fibres.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, les parois pourront être intégrées dans la bouche de distribution du robinet plutôt que d'être portées par un embout amovible.

Ainsi, dans une variante de réalisation, on pourra envisager un orifice de sortie plus large divisé en de multiples ouvertures par plus de parois, ces parois pouvant être transversales et/ou longitudinales.

Ainsi, dans une autre variante de réalisation, la matière et/ou l'état de surface des parois pourront être optimisés pour favoriser l'accrochage des gouttes.

## Revendications

1. Robinet (4) destiné à distribuer les aliments contenus dans un récipient (2) d'appareil électroménager de préparation culinaire, ledit robinet (4) comportant un corps (40) comprenant un orifice d'entrée (42A), un orifice de sortie (43A) et des moyens de fermeture (45) du robinet à ouverture commandée disposés entre l'orifice d'entrée (42A) et l'orifice de sortie (43A), **caractérisé en ce que** ledit orifice de sortie (43A) comporte un embout (5) flexible amovible comprenant une ouverture (50) de forme oblongue comportant au moins deux parois (51, 52) s'étendant au travers de l'orifice de sortie (43A) pour diviser ce dernier en plusieurs ouvertures (50A) de section de passage réduite et **en ce que**, lesdites parois (51, 52) comportent une extrémité supérieure (51A, 52A) s'étendant à l'intérieur dudit corps (40), lesdites extrémités supérieures (51 A, 52A) des parois étant disposées à des hauteurs différentes selon l'axe de l'orifice de sortie (43A).

2. Robinet selon la revendication 1, **caractérisé en ce que** les extrémités supérieures (51A, 52A) des parois sont décalées axialement de sorte que la droite passant par les extrémités supérieures (51 A, 52A) des dites parois forme un angle de moins de 80° par rapport à l'axe de l'orifice de sortie (43A).

3. Robinet selon l'une quelconque des revendications 1 à 2, **caractérisé en ce que** lesdites parois (51, 52) s'étendent vers l'intérieur du robinet (5) sur des hauteurs axiales différentes.

4. Embout (5) destiné à être monté sur un robinet (4) pour distribuer les aliments contenus dans un récipient (2), ledit embout (5) comportant un corps adapté pour être fixé au niveau d'un orifice de sortie (43) dudit robinet, **caractérisé en ce que** ledit embout (5) est réalisé en matériau flexible et comporte un ouverture oblongue (50) comprenant au moins deux parois (51, 52) s'étendant au travers de l'orifice de sortie (43) pour diviser ce dernier en plusieurs ouvertures (50A) de section de passage réduite, lesdites parois (51, 52) s'étendant vers l'intérieur du robinet (4) sur des hauteurs différentes.

5. Embout selon la revendication 4, **caractérisé en ce qu'**il est réalisé en matériau élastomère.

6. Appareil électroménager de préparation culinaire comportant un récipient de travail (2) renfermant un outil rotatif (3) pour le mixage des aliments, **caractérisé en ce que** ledit récipient (2) comporte un robinet (4) selon l'une quelconque des revendications 1 à 3.
